# EUROPEAN PATENT SPECIFICATION

(11) **EP 1 486 287 B1**
(45) Date of publication and mention of the grant of the patent: **16.04.2008**
(21) Application number: 04013486.8
(22) Date of filing: 08.06.2004
(51) Int. Cl.: B23P 15/00, E04C 2/08, A47B 13/08

(54) **Method for obtaining a metallic hollow sandwich panel and product obtained with the method**
Verfahren zum Herstellen eines metallischen hohlen Sandwichpanels und die so erhaltenen Produkte
Procédé de réalisation d'un panneau sandwich creux métallique et produit obtenu selon le procédé

(30) Priority: 13.06.2003 IT TV20030086
(43) Date of publication of application: 15.12.2004
(73) Proprietor: FALMEC S.P.A., 31029 Vittorio Veneto (Treviso) (IT)
(72) Inventor: Poser, Danilo, 31029 Vittorio Veneto (Prov. of Treviso) (IT)
(74) Representative: Modiano, Micaela Nadia

(56) References cited:
- GB-A- 959 184
- JP-A- 2001 138 043
- US-A1- 2003 041 786

## Description

The present invention relates to a method for obtaining a metallic hollow sandwich panel and to the product obtained with the method.
See for example, GB 959 184.

Currently, a method for obtaining metallic hollow sandwich panels that can be used for example to provide partitions or walls or surfaces of tables and shelves is known.

This known type of method usually provides for bending all the sides of a first flat metal plate that is generally rectangular or square so as to obtain raised perimetric edges that have a preset height and protrude approximately at right angles to the plane of the metal plate.

The mutually adjacent ends of each raised edge are for example welded so as to form for the first metal plate a perimetric border that makes it assume a substantially box-like configuration that is suitable to be filled with materials such as polystyrene and particlewood.

A second flat metal plate is associated in an upper region, preferably by way of a second welding operation, with the border of the first metal plate thus shaped and has a shape and dimensions that allow it to be superimposed on said border so as to mate perimetrically with the outer edges of the border, to obtain a metallic hollow sandwich panel having a preset thickness.

The main drawback that can be observed in this conventional method is that the welding operations entailed by the method, in addition to increasing the length of the production cycle, are very expensive, since they require the use of specialized personnel and it is also necessary to achieve perfect superimposing of the second metal plate.

Another drawback arises from the fact that the aesthetic value of the resulting metallic hollow sandwich panels is in any case compromised by the sight of the welding beads at the various joining regions.

A further drawback is that before welding the second metal plate perimetrically to the perimetric border of the first metal plate, said first metal plate is usually filled with materials such as for example polystyrene or particlewood, and this makes the finished product excessively heavy.

Another drawback is that the machines usually used to bend the metal plate allow to provide raised edges that have a preset height only if the metal plate is flat, and this entails that in order to provide raised edges that have a constant thickness on metal plates that have a curved profile it is necessary to associate with the sides of the metal plates respective bands of material that are shaped appropriately and obtained separately, with consequent additional costs due both to the production or purchase of said bands of material and to the need to weld the bands perimetrically to a preset metal plate.

The aim of the present invention is to solve the above-mentioned problems, eliminating the drawbacks of the cited known art, by providing a method that allows to obtain preset metallic hollow sandwich panels with a limited number of operations and/or steps, which generally can be performed rapidly and easily, so as to achieve a reduction in production costs.

Within this aim, an object of the present invention is to provide a method that allows to obtain metallic hollow sandwich panels that have an excellent aesthetic value, preventing their finish from being compromised by the sight of any welding beads at the edges or at other different joining regions.

Another object is to provide a method that can be used in a versatile way, so as to allow to produce metallic hollow sandwich panels that have a flat or curved shape and have any thickness.

Another object is to provide a method that in addition to allowing to provide metallic hollow sandwich panels that have a pleasant aesthetic impact also allows to make them structurally simple and lighter.

A further object is to provide a method that provides for the automation of several steps or that in any case can be performed easily even by personnel that is not particularly trained.

A still further object is to provide a method that allows to obtain metallic hollow sandwich panels of excellent quality that are therefore resistant to specific mechanical stresses and are scarcely susceptible to deterioration phenomena.

This aim and these and other objects that will become better apparent hereinafter are achieved by a method for obtaining metallic hollow sandwich panels, providing the steps of:
-- providing one or more profiled elements that are axially elongated and are externally provided, at a first wing and at an opposite second wing, with first seats for the flush positioning of a first metal plate and of a second metal plate and second seats for means for fixing said first and second metal plates to said one or more profiled elements;
-- cutting and arranging the ends of said one or more profiled elements mutually adjacent so as to obtain an annular ridge that is closed perimetrically for flush containment of said first and second metal plates at said first seats;
-- applying said fixing means at said second seats of said first and second wings;
-- coupling said first and second metal plates to said fixing means so as to obtain a preset metallic hollow sandwich panel.

Further characteristics and advantages of the present invention will become better apparent from the following detailed description of a particular but not exclusive embodiment thereof, illustrated by way of nonlimiting example in the accompanying drawings, wherein:
Figures 1 and 2 are perspective views of two flat metallic hollow sandwich panels, one panel being provided with a grooved perimetric profile, the other panel having a smooth perimetric profile;
Figure 3 is a perspective view of four profiled elements arranged so that their adjacent ends are mutually in contact so as to form an approximately square perimetrically closed border;
Figures 4 and 5 are a perspective view and a side view of the metallic hollow sandwich panel with the grooved profile, in a cross-section taken along the lines IV-IV of Figure 1;
Figures 6 and 7 are a perspective view and a side view of the metallic hollow sandwich panel with the smooth profile, in a cross-section taken along the lines VI-VI of Figure 2;
Figure 8 is an exploded perspective view of the metallic hollow sandwich panel of Figure 1;
Figure 9 is an exploded perspective view of a curved metallic hollow sandwich panel provided with a grooved perimetric profile.

In the embodiments that follow, individual characteristics, given in relation to specific examples, may actually be interchanged with other different characteristics that exist in other embodiments.

The figures cited above relate to a method for obtaining metallic hollow sandwich panels having a straight profile and a curved profile.

With reference to the figures, the reference numeral 1 designates one of a plurality of profiled elements that have a substantially straight axial extension and are preferably obtained during the extrusion of a preset metallic material, such as for example aluminum or steel.

Each of said one or more profiled elements has for example an approximately C-shaped transverse cross-section and is therefore constituted by a first wing 2 and by an opposite second wing 3, which are mutually parallel and are connected at one end by a third wing 4 that is arranged approximately at right angles to them.

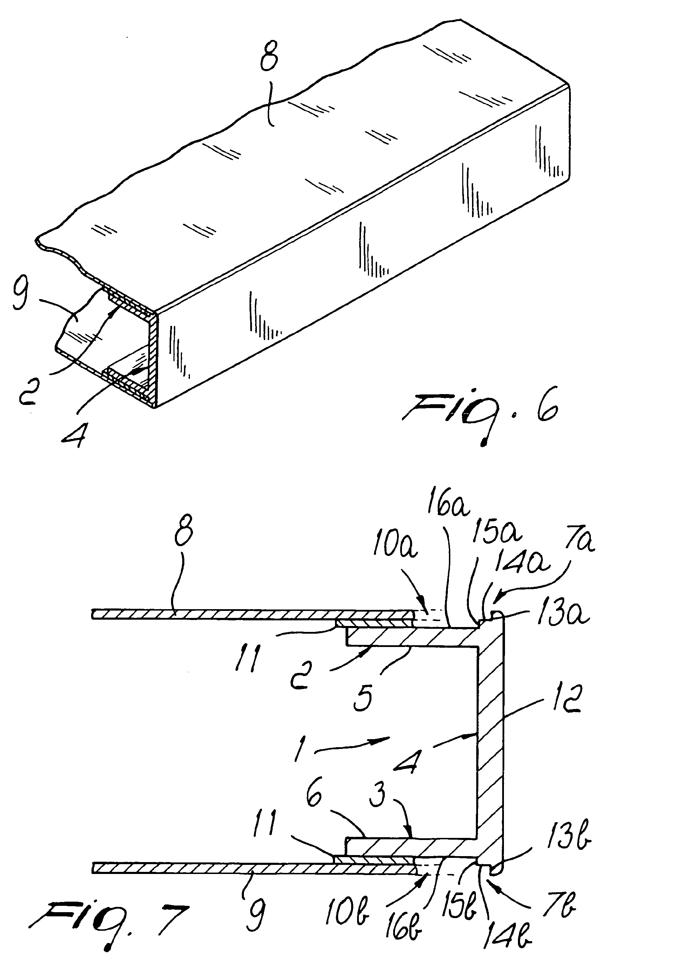

With reference to Figures 6 and 7, the first and second wings 2 and 3 have, on the opposite side with respect to their facing first and second internal surfaces designated by the reference numerals 5 and 6, respective first seats, designated by the reference numerals 7a and 7b, for the flush positioning of a first metal plate 8 and of a second metal plate 9, which are flat and have a chosen thickness.

The first and second wings 2 and 3 further have, again on the opposite side with respect to the first and second internal surfaces 5 and 6, respective second seats, designated by the reference numerals 10a and 10b, for positioning means for fixing the first and second metal plates 8 and 9 to the one or more profiled elements 1; such fixing means are preferably constituted by one or more layers of material 11, for example of the double-adhesive type, to be applied to the second seats 10a and 10b.

The first seats 7a and 7b are mutually adjacent and lie on a plane of arrangement located above the second seats 10a and 10b, so as to form an approximately S-shaped configuration together with them in a transverse cross-section.

In greater detail, the first seats 7a and 7b partially affect the thickness of the third wing 4 up to the vicinity of the outer surface 12 thereof, so as to form first step-like surfaces 13a and 13b that lie approximately parallel to the outer surface 12 so as to affect part of the thickness of the first and second wings 2 and 3 over a vertical extension that is approximately equal to the height of the first and second metal plates 8 and 9.

The first step-like surfaces 13a and 13b are connected, at their lower ends, to respective first flat regions 14a and 14b that are arranged at right angles to the first step-like surfaces 13a and 13b so as to allow the contact of at least part of the respective first and second metal plates 8 and 9.

In turn, the first flat regions 14a and 14b are connected, on the opposite side with respect to the first step-like surfaces 13a and 13b, to respective second step-like surfaces 15a and 15b that are parallel to the preceding step-like surfaces and affect part of the thickness of the first and second wings 2 and 3 over a vertical extension that is approximately equal to the height of the one or more layers of double-adhesive material 11.

The second step-like surfaces 15a and 15b are therefore connected, on the opposite side with respect to the respective first flat regions 14a and 14b, to second flat regions, designated by the reference numerals 16a and 16b, for the contact of the one or more layers of double-adhesive material 11, which starting from the second step-like surfaces 14a and 14b lie at right angles to them until they reach the ends of the first and second wings 2 and 3 that are directed in the opposite direction with respect to the third wing 4.

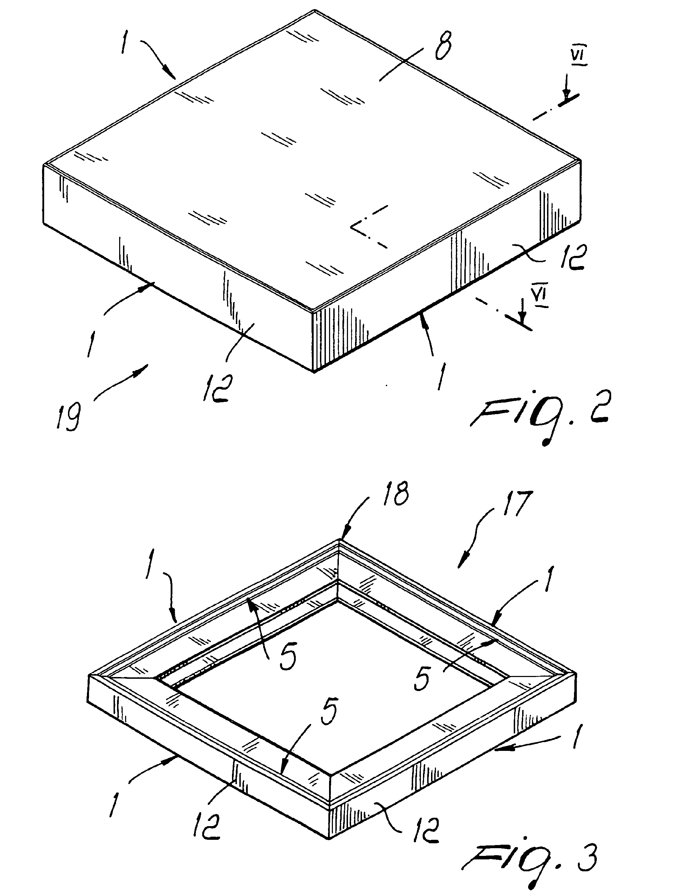

With reference to Figure 3, the method provides for cutting the ends of the one or more profiled elements 1 and then arranging such ends mutually adjacent, so as to obtain an annular ridge 17 that is optionally perimetrically closed for flush containment of the first and second metal plates 8 and 9.

The annular ridge 17 in fact has, in plan view, a polygonal border-like configuration, for example a preferably rectangular or square one, that forms at the first seats 7a and 7b, which are mutually connected in this manner, respective recesses, designated by the reference numeral 18, that are approximately shaped complementarily to the perimeter of the first and second metal plates 8 and 9 and are therefore suitable to contain them in a flush configuration.

The ends of the one or more profiled elements 1 are preferably cut along oblique planes that are inclined at 45° and are mutually perpendicular, so that each one of the one or more profiled elements 1 has, in plan view, a substantially trapezoidal configuration that is particularly suitable to provide a connecting contact between the adjacent ends of the one or more profiled elements 1.

The one or more layers of double-adhesive material 11 are then applied at the respective second seats 10a and 10b, so that once they are rested on the second flat regions 16a and 16b they form, on the opposite side with respect to them, surfaces that lie at the same height as the first flat regions 14a and 14b.

The method then provides for the coupling of the first and second metal plates 8 and 9 to the double-adhesive layers 11, so as to obtain, as shown in Figure 2, a preset metallic hollow sandwich panel 19 that is flat and substantially smooth at its perimetric thickness.

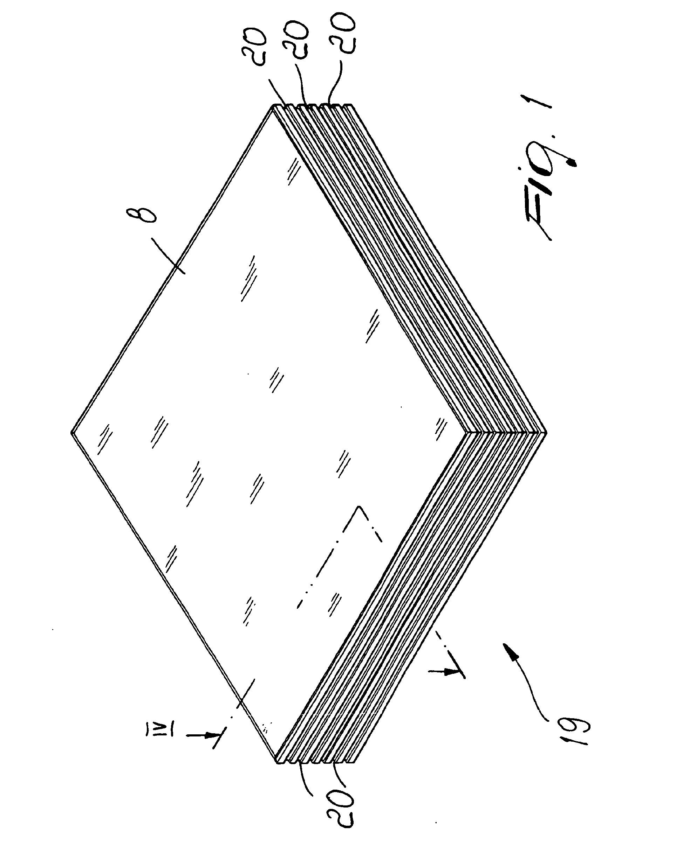

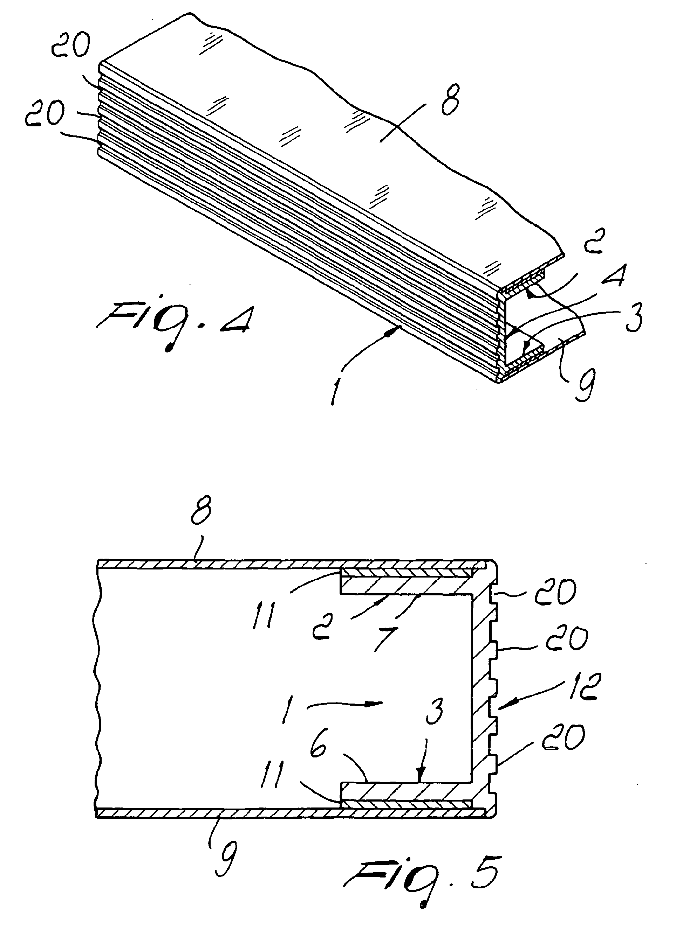

Optionally, depending on the various aesthetic requirements, as shown in Figures 1, 4, 5 and 8, it is also possible to give the metallic hollow sandwich panel 19 a chosen optical effect with grooved bands at the outer surface 12 of each profiled element 1.

This is allowed by performing, before the step for cutting or mating the adjacent ends of the one or more profiled elements 1, at least one treatment, such as an operation for oxidizing the outer surface 12 of said profiled elements.

This oxidizing operation is followed by one or more selective removals of material from the surface 12 thus oxidized and finally by at least one polishing thereof, so as to allow to distinguish a plurality of grooved bands, designated by the reference numeral 20, that are mutually parallel and have a different color effect.

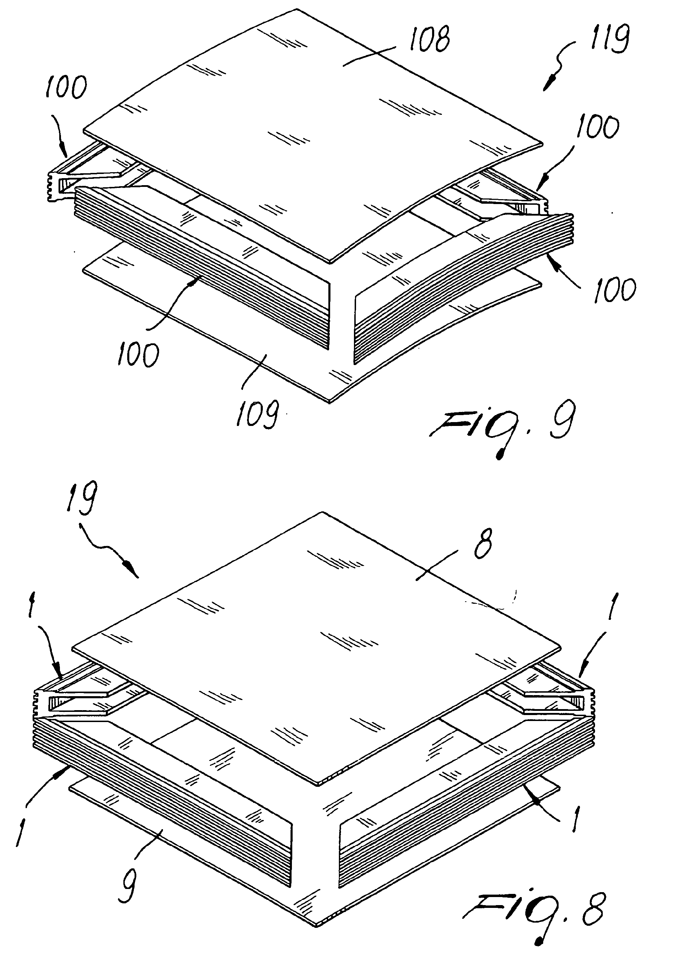

In addition to being used to obtain flat metallic hollow sandwich panels, the method thus described can also be performed to provide metallic hollow sandwich panels that have a curved profile, such as the one designated by the reference numeral 119 in Figure 9.

This is allowed by using one or more profiled elements 100, which are also obtained preferably during extrusion and are different from the one or more profiled elements 1 only in that they have a curved or arc-like profile instead of a straight profile, so as to allow the connection of a first metal plate 108 and of a second metal plate 109 that have a corresponding curved or arc-like profile.

It has thus been found that the invention has achieved the intended aim and objects, a method having been provided that allows to obtain preset metallic hollow sandwich panels with a limited number of operations and without having to resort to coupling methods, such as for example welding, that require qualified personnel and therefore make it expensive to perform said process.

It has also been found that the method allows to obtain metallic hollow sandwich panels that have an excellent aesthetic value, since in fact it prevents their finish from being compromised by the sight of any welding beads at the edges or at other different connecting regions.

The method can also be used in a versatile way, so as to allow to provide metallic hollow sandwich panels that have a flat or curved extension and have the chosen optical and/or color effects at their perimetric thickness.

The invention is of course susceptible of numerous modifications and variations, the scope of the invention being defined by the appended claims.

The materials used, as well as the dimensions that constitute the individual components of the invention, may of course be more pertinent according to specific requirements.

The various means for performing certain different functions need not certainly coexist only in the illustrated embodiment but can be present per se in many embodiments, including ones that are not illustrated.

The characteristics that are indicated as advantageous, convenient or the like may also be omitted or be replaced by equivalents.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for obtaining metallic hollow sandwich panels (19, 119), providing the steps of:
-- providing one or more profiled elements (1, 100) that are axially elongated and are externally provided, at a first wing (2) and at an opposite second wing (3), with first seats (7a, 7b) for the flush positioning of a first metal plate (8, 108) and of a second metal plate (9, 109) and second seats (10a, 10b) for means for fixing (11) said first and second metal plates (8, 108 ; 9, 109) to said one or more profiled elements (1, 100);
-- cutting and arranging the ends of said one or more profiled elements (1, 100) mutually adjacent so as to obtain an annular ridge (17) that is closed perimetrically for flush containment of said first and second metal plates (8, 108 ; 9, 109) at said first seats (7a, 7b);
-- applying said fixing means (11) at said second seats (10a, 10b) of said first and second wings (2, 3);
-- coupling said first and second metal plates (8, 108 ; 9, 109) to said fixing means (11) so as to obtain a preset metallic hollow sandwich panel (19, 119).

2. The method according to claim 1, **characterized in that** the ends of said one or more profiled elements (1, 100) are cut along oblique planes that are inclined at 45°, so that each one of said one or more profiled elements (1, 100) has, in plan view, a substantially trapezoidal configuration that is adapted to provide a connecting contact between the adjacent ends of said one or more profiled elements (1, 100).

3. The method according to claim 2, **characterized in that** the application of said one or more layers of double-adhesive material (11) at said second seats (10a, 10b) is performed so that once they rest against the respective second flat regions (16a, 16b), said layers form, on the opposite side with respect to them, surfaces that lie at the same height as first flat regions (14a, 14b).

4. The method according to one of the preceding claims, **characterized in that** it provides, prior to the step for cutting the adjacent ends of said one or more profiled elements (1, 100) or arranging them mutually adjacent, for at least one process such as an oxidation of said outer surface (12) of the third wing (4), that is arranged approximately at right angles to said first and second wings (2, 3).

5. The method according to claim 4, **characterized in that** it provides, following said oxidation operation, for one or more selective removals of material from said outer surface (12) thus oxidized and for the subsequent execution of at least one polishing thereof, so as to allow to distinguish a plurality of grooved bands (20) that are mutually parallel and have a different color effect.

6. The method according to one of the preceding claims, **characterized in that** said one or more profiled elements (100) have a curved or arc-like profile, so as to allow, by means of the connection of a first metal plate (108) and a second metal plate (109) having a corresponding curved or arc-like profile to them, to obtain a chosen metallic hollow sandwich panel (119) that has a curved or arc-like profile.

7. The method according to one of the preceding claims, **characterized in that** said fixing means (11) are associated to said first and second wings (2, 3) beforehand.

8. A metallic hollow sandwich panel (19, 119), comprising a first metal plate (8, 108) and a second metal plate (9, 109) the panel being constituted by profiled elements (1, 100) that are arranged mutually adjacent so as to form a closed annular ridge (17) provided with first seats (7a, 7b) for means for the flush containment of said first and second metal plates (8, 108 ; 9, 109) **characterized by** the profiled elements (1, 100) being provided with second seats (10a, 10b) and for means for fixing (11) said first and second metal plates (8, 108 ; 9, 109) to said annular ridge (17).

9. The panel according to claim 8, **characterized in that** said profiled elements (1) have a substantially straight axial extension and are obtained during extrusion of a preset metallic material.

10. The panel according to claim 8, **characterized in that** said profiled elements (1, 100) have, in a transverse cross-section, an approximately C-shaped configuration, so as to form a first wing (2) and an opposite second wing (3) that are mutually parallel and are connected at one end to a third wing (4) that is arranged approximately at right angles to them.

11. The panel according to claim 10, **characterized in that** said first seats (7a, 7b) are directed in the opposite direction with respect to the facing first and second internal surfaces (5, 6) of said first and second wings (2, 3).

12. The panel according to one of claims 8-11, **characterized in that** said fixing means (11) are constituted by one or more layers of double-adhesive material.

13. The panel according to one of claims 8-12, **characterized in that** said first seats (7a, 7b) are mutually adjacent and lie on a plane of arrangement that is located above said second seats (10a, 10b) so as to form, together with them, in a transverse cross-section, an approximately S-shaped configuration.

14. The panel according to one of claims 10-13, **characterized in that** said first seats (7a, 7b) partially affect the thickness of said third wing (4) up to the vicinity of the outer surface thereof, so as to form first step-like surfaces (13a, 13b) that lie approximately parallel to said outer surface, affecting part of the thickness of said first (2) and second (3) wings over a vertical extension that is approximately equal to the height of said first (8) and second (9) metal plates.

15. The panel according to claim 14, **characterized in that** said first step-like surfaces (13a, 13b) are connected at their lower ends to respective first flat regions (14a, 14b) that are arranged at right angles to said first step-like surfaces (13a, 13b) so as to allow the contact of at least part of the respective said first and second metal plates (8, 9).

16. The panel according to claim 15, **characterized in that** said first flat regions (14a, 14b) are connected, on the opposite side with respect to said first step-like surfaces (13a, 13b), to respective second step-like surfaces (15a, 15b) that are parallel to the preceding ones and affect part of the thickness of said first and second wings (2, 3) over a vertical extension that corresponds approximately to the height of said one or more layers of double-adhesive material (11).

17. The panel according to claim 16, **characterized in that** said second step-like surfaces (15a, 15b) are connected, on the opposite side with respect to said first flat regions (14a, 14b), to respective second flat regions (16a, 16b) for supporting said one or more layers of double-adhesive material (11).

18. The panel according to claim 17, **characterized in that** said second flat regions (16a, 16b), starting from said second step-like surfaces (15a, 15b), extend at right angles to them until they reach the ends of said first and second wings (2, 3) that are directed away from said third wing (4).

19. The panel according to one claims 8-18, **characterized in that** said annular ridge (17), which is perimetrically closed, has in plan view approximately the shape of a polygonal border that is square or rectangular, so as to form, at said first seats (7a, 7b), which are thus connected to each other, respective recesses that are approximately shaped complementarily to the perimeter of said first and second metal plates and therefore are adapted to contain said metal plates (8, 9) in a flush configuration.

20. The panel according to claim 8, **characterized in that** it is flat and grooved (20) at its perimetric thickness.

21. The panel according to claim 8, **characterized in that** said metallic hollow sandwich panel (19) is flat and is substantially smooth at its perimetric thickness.

22. The panel according to one of claims 8 or 10-21, **characterized in that** said profiled elements (100) have a curved or arc-like profile, so as to allow by means of the connection of a first metal plate (108) and a second metal plate (109) having a corresponding curved or arc-like profile to them, to obtain a chosen metallic hollow sandwich panel (119) that has a curved or arc-like profile.

## Patentansprüche

1. Ein Verfahren zur Herstellung metallischer hohler Verbundplatten (19, 119), das folgende Schritte bereitstellt:
- Bereitstellung eines oder mehrerer profilierter Elemente (1, 100), die axial lang gestreckt sind und extern, an einem ersten Flügel (2) und an einem entgegengesetzten zweiten Flügel (3), mit ersten Sitzen (7a, 7b) zur bündigen Positionierung einer ersten Metallplatte (8, 108) und einer zweiten Metallplatte (9, 109) und mit zweiten Sitzen (10a, 10b) für Mittel zur Befestigung (11) der ersten und der zweiten Metallplatte (8, 108; 9, 109) an dem einen oder den mehreren profilierten Elementen (1, 100) ausgestattet sind;
- Schneiden und Anordnen der Enden des einen oder der mehreren profilierten Elemente (1, 100) nebeneinander, um eine ringförmige Rille (17) zu erhalten, die perimetrisch zum bündigen Einschließen der ersten und der zweiten Metallplatte (8, 108; 9, 109) an den ersten Sitzen (7a, 7b) geschlossen ist;
- Anbringung der Befestigungsmittel (11) an den zweiten Sitzen (10a, 10b) des ersten und des zweiten Flügels (2, 3);
- Kopplung der ersten und der zweiten Metallplatte (8, 108; 9, 109) mit den Befestigungsmitteln (11), um eine vordefinierte metallische hohle Verbundplatte (19, 119) zu erhalten.

2. Das Verfahren gemäß Anspruch 1, **dadurch gekennzeichnet, dass** die Enden des einen oder der mehreren profilierten Elemente (1, 100) entlang schräger Ebenen geschnitten sind, die um 45° geneigt sind, so dass jedes der einen oder mehreren profilierten Elemente (1, 100) im Grundriss eine im Wesentlichen trapezförmige Form hat, die geeignet ist, einen Verbindungskontakt zwischen den benachbarten Enden des einen oder der mehreren profilierten Elemente (1, 100) herzustellen.

3. Das Verfahren gemäß Anspruch 2, **dadurch gekennzeichnet, dass** die Anbringung der einen oder mehreren Schichten von doppelt klebendem Material (11) an den zweiten Sitzen (10a, 10b) so durchgeführt wird, dass die Schichten , sobald sie auf den entsprechenden zweiten flachen Bereichen(16a, 16b) ruhen, auf der ihnen entgegengesetzten Seite Oberflächen bilden, die auf derselben Höhe wie die ersten flachen Bereiche (14a, 14b)liegen.

4. Das Verfahren gemäß einem der obigen Ansprüche, **dadurch gekennzeichnet, dass** es, vor dem Schritt des Schneidens der benachbarten Enden des einen oder der mehreren profilierten Elemente (1, 100) oder des Anordnens derselben nebeneinander mindestens ein Verfahren wie z. B. eine Oxidation der äußeren Oberfläche (12) des dritten Flügels (4) bereitstellt, das in etwa in rechten Winkeln zu dem ersten und dem zweiten Flügel (2, 3) angeordnet ist.

5. Das Verfahren gemäß Anspruch 4, **dadurch gekennzeichnet, dass** es nach dem Oxidationsvorgang ein oder mehrere selektive Entfernungsvorgänge von Material von der so oxidierten äußeren Oberfläche (12) und die anschließende Ausführung mindestens einer Politur davon bereitstellt, so dass eine Vielzahl von mit Nuten versehenen Banden (20) unterschieden werden können, die zueinander parallel sind und einen unterschiedlichen Farbeffekt haben.

6. Das Verfahren gemäß einem der obigen Ansprüche, **dadurch gekennzeichnet, dass** das das eine oder die mehreren profilierten Elemente (100) ein gekrümmtes oder bogenartiges Profil haben, damit durch die Verbindung einer ersten Metallplatte (108) und einer zweiten Metallplatte (109), die ein entsprechendes gekrümmtes oder bogenartiges Profil haben, eine ausgewählte metallische hohle Verbundplatte (119) gewonnen werden kann, die ein gekrümmtes oder bogenartiges Profil hat.

7. Das Verfahren gemäß einem der obigen Ansprüche, **dadurch gekennzeichnet, dass** die Befestigungsmittel (11) im Voraus an dem ersten und zweiten Flügel (2, 3) angebracht werden.

8. Eine metallische hohle Verbundplatte (19, 119), die eine erste Metallplatte (8, 108) und eine zweite Metallplatte (9, 109) umfasst, wobei die Platte aus profilierten Elementen (1, 100) besteht, die nebeneinander angeordnet sind, um eine geschlossene ringförmige Rille (17) zu bilden, die mit Sitzen (7a, 7b) ausgestattet ist, zum bündigen Einschließen der ersten und der zweiten Metallplatte (8, 108; 9, 109) und **dadurch gekennzeichnet, dass** die profilierten Elemente (1, 100) mit zweiten Sitzen (10a, 10b) ausgestattet sind für Mittel (11), um die erste und die zweite Metallplatte (8, 108; 9, 109) an der ringförmigen Rille (17) zu befestigen.

9. Die Platte gemäß Anspruch 8, **dadurch gekennzeichnet, dass** das die profilierten Elemente (1) eine im Wesentlichen gerade axiale Ausdehnung haben und während der Extrusion eines vordefinierten metallischen Materials erhalten werden.

10. Die Platte gemäß Anspruch 8, **dadurch gekennzeichnet, dass** die profilierten Elemente (1, 100) in einem transversalen Querschnitt eine ungefähr C-förmige Anordnung haben, so dass sie einen ersten Flügel (2) und einen entgegengesetzten zweiten Flügel (3) bilden, die zueinander parallel sind und an einem Ende mit einem dritten Flügel (4) verbunden sind, der ungefähr in rechten Winkeln zu ihnen angeordnet ist.

11. Die Platte gemäß Anspruch 10, **dadurch gekennzeichnet, dass** die ersten Sitze (7a, 7b) in die Richtung weisen, die den gegenüberliegenden ersten und zweiten inneren Oberflächen (5, 6) des ersten und zweiten Flügels (2, 3) entgegengesetzt liegt.

12. Die Platte gemäß einem der Ansprüche 8-11, **dadurch gekennzeichnet, dass** die Befestigungsmittel (11) aus einer oder mehreren Schichten von doppelt klebendem Material bestehen.

13. Die Platte gemäß einem der Ansprüche 8-12, **dadurch gekennzeichnet, dass** die ersten Sitze (7a, 7b) benachbart sind und auf einer Ebene der Anordnung liegen, die sich über den zweiten Sitzen (10a, 10b) befindet, so dass sie, gemeinsam mit ihnen, in einem transversalen Querschnitt eine ungefähr S-förmige Anordnung bilden.

14. Die Platte gemäß einem der Ansprüche 10-13, **dadurch gekennzeichnet, dass** die ersten Sitze (7a, 7b) teilweise die Dicke des dritten Flügels (4) bis zur Nähe der äußeren Oberfläche (13a, 13b) davon beeinflussen, um erste stufenartige Oberflächen zu bilden, die ungefähr parallel zur äußeren Oberfläche liegen und einen Teil der Dicke des ersten (2) und des zweiten (3) Flügels über eine vertikale Ausdehnung beeinflussen, die ungefähr gleich der Höhe der ersten (8) und der zweiten (9) Metallplatte ist.

15. Die Platte gemäß Anspruch 14, **dadurch gekennzeichnet, dass** die ersten stufenartigen Oberflächen (13a, 13b) an ihren unteren Enden mit entsprechenden ersten flachen Bereichen (14a, 14b) verbunden sind, die in rechten Winkeln zu den ersten stufenartigen Oberflächen (13a, 13b) angeordnet sind, um den Kontakt mindestens eines Teils der entsprechenden ersten und zweiten Metallplatte (8, 9) zu ermöglichen.

16. Die Platte gemäß Anspruch 15, **dadurch gekennzeichnet, dass** die ersten flachen Bereiche (14a, 14b) an der Seite, die den ersten stufenartigen Oberflächen (13a, 13b) entgegengesetzt liegt, mit entsprechenden zweiten stufenartigen Oberflächen (15a, 15b) verbunden sind, die parallel zu den zuvor erwähnten sind und einen Teil der Dicke des ersten und des zweiten Flügels (2, 3) über eine vertikale Ausdehnung beeinflussen, die ungefähr der Höhe der einen oder mehreren Schichten von doppelt klebendem. Material (11) entspricht.

17. Die Platte gemäß Anspruch 16, **dadurch gekennzeichnet, dass** die zweiten stufenartigen Oberflächen (15a, 15b) an der Seite, die den ersten flachen Bereichen (14a, 14b) entgegengesetzt liegt, mit entsprechenden zweiten flachen Bereichen (16a, 16b) zum Tragen der einen oder mehreren Schichten von doppelt klebendem Material (11) verbunden sind.

18. Die Platte gemäß Anspruch 17, **dadurch gekennzeichnet, dass** die zweiten flachen Bereiche (16a, 16b), ausgehend von den zweiten stufenartigen Oberflächen (15a, 15b), sich in rechten Winkeln zu ihnen erstrecken, bis sie die Enden des ersten und des zweiten Flügels (2, 3) erreichen, die von dem dritten Flügel (4) fort weisen.

19. Die Platte gemäß einem der Ansprüche 8-18, **dadurch gekennzeichnet, dass** die ringförmige Rille (17), die perimetrisch geschlossen ist, im Grundriss ungefähr die Form einer polygonalen Umrandung hat, die quadratisch oder rechteckig ist, um an den ersten Sitzen (7a, 7b), die so miteinander verbunden sind, entsprechende Vertiefungen zu bilden, die ungefähr komplementär zum Umfang der ersten und der zweiten Metallplatte geformt sind und daher ausgebildet sind, um die Metallplatten (8, 9) in einer bündigen Anordnung zu halten.

20. Die Platte gemäß Anspruch 8, **dadurch gekennzeichnet, dass** sie an ihrer perimetrischen Dicke flach und mit Nuten (20) versehen ist.

21. Die Platte gemäß Anspruch 8, **dadurch gekennzeichnet, dass** die metallische hohle Verbundplatte (19) flach ist und an ihrer perimetrischen Dicke im Wesentlichen glatt ist.

22. Die Platte gemäß der Ansprüche 8 oder 10-21, **dadurch gekennzeichnet, dass** die profilierten Elemente (100) ein gekrümmtes oder bogenartiges Profil haben, so dass durch die Verbindung einer ersten Metallplatte (108) und einer zweiten Metallplatte (109), die ein entsprechendes gekrümmtes oder bogenartiges Profil haben, eine ausgewählte metallische hohle Verbundplatte (119) gewonnen wird, die ein gekrümmtes oder bogenartiges Profil hat.

## Revendications

1. Procédé pour la réalisation de panneaux sandwich creux métalliques (19, 119) prévoyant les étapes consistant à:
- fournir un ou plusieurs éléments profilés (1, 100) qui sont allongés axialement et qui sont munis extérieurement, au niveau d'une première aile (2) et au niveau d'une deuxième aile opposée (3), de premiers logements (7a, 7b) pour le positionnement à fleur d'une première plaque métallique (8, 108) et d'une deuxième plaque métallique (9, 109), et de deuxièmes logements (10a, 10b) pour des moyens de fixation (11) desdites première et deuxième plaques métalliques (8, 108; 9, 109) auxdits un ou plusieurs éléments profilés (1, 100);
- couper et agencer les extrémités desdits un ou plusieurs éléments profilés (1, 100) mutuellement adjacents de sorte à obtenir une corniche annulaire (17) qui est fermée périmétriquement pour contenir à fleur lesdites première et deuxième plaques métalliques (8, 108; 9,109) au niveau desdits premiers logements (7a, 7b);
- appliquer lesdits moyens de fixation (11) au niveau desdits deuxièmes logements (10a, 10b) desdites première et deuxième ailes (2, 3);
- coupler lesdites première et deuxième plaques métalliques (8, 108; 9, 109) auxdits moyens de fixation (11) de sorte à obtenir un panneau sandwich creux métallique (19, 119) prédéfini.

2. Procédé selon la revendication 1, **caractérisé en ce que** les extrémités desdits un ou plusieurs éléments profilés (1, 100) sont coupés le long de plans obliques qui sont inclinés de 45°, de sorte que chacun desdits un ou plusieurs éléments profilés (1, 100) présente, en vue de plan, une configuration sensiblement trapézoïdale qui est adaptée pour fournir un contact de connexion entre les extrémités adjacentes desdits un ou plusieurs éléments profilés (1,100).

3. Procédé selon la revendication 2, **caractérisé en ce que** l'application desdites une ou plusieurs couches de matériau bi-adhésif (11) au niveau desdits deuxièmes logements (10a 10b) est réalisée de sorte qu'une fois appuyées contre des deuxièmes régions plates respectives (16a, 16b), lesdites couches forment, sur le côté opposé par rapport à elles, des surfaces qui se trouvent à la même hauteur que des premières régions plates (14a, 14b).

4. Procédé selon l'une des revendications précédentes, **caractérisé en ce qu'**il prévoit, avant l'étape de coupage des extrémités adjacentes desdits un ou plusieurs éléments profilés (1, 100) ou de leur agencement mutuellement adjacents, au moins un traitement tel qu'une oxydation de la surface externe (12) de la troisième aile (4) qui est agencée approximativement à angle droit par rapport auxdites première et deuxième ailes (2, 3).

5. Procédé selon la revendication 4, **caractérisé en ce qu'**il prévoit, après l'opération d'oxydation, un ou plusieurs enlèvements sélectifs de matériau de la surface externe (12) ainsi oxydée et l'exécution successive d'au moins un ou plusieurs polissage de celle-ci, de sorte à permettre la distinction d'une pluralité de bandes rainurées (20) qui sont mutuellement parallèles et présentent un effet de couleur différent.

6. Procédé selon l'une des revendications précédentes, **caractérisé en ce que** lesdits un ou plusieurs éléments profilés (100) présente un profil courbe ou en forme d'arc, de sorte à permettre, au moyen de la connexion à ceux-ci d'une première plaque métallique (108) et d'une deuxième plaque métallique (109) présentant un profil courbe ou en forme d'arc correspondant, pour obtenir un panneau sandwich creux métallique (119) choisi qui présente un profil courbe ou en forme d'arc.

7. Procédé selon l'une des revendications précédentes, **caractérisé en ce que** lesdits moyens de fixation (11) sont associés auparavant auxdites première et deuxième ailes (2, 3).

8. Panneau sandwich creux métallique (19, 119), comprenant une première plaque métallique (8, 108) et une deuxième plaque métallique (9, 109), le panneau étant constitué par des éléments profilés (1, 100) qui sont agencés mutuellement adjacents de sorte à former une corniche annulaire fermée (17) munie de premiers logements (7a, 7b) pour contenir à fleur lesdites première et deuxième plaques métalliques (8, 108; 9, 109) et **caractérisé par** les éléments profilés (1, 100) étant munis de deuxièmes logements (10a, 10b) pour des moyens de fixation (11) desdites première et deuxième plaques métalliques (8, 108; 9, 109) à ladite corniche annulaire (17).

9. Panneau selon la revendication 8, **caractérisé en ce que** lesdits éléments profilés (1) présentent une extension axiale sensiblement droite et sont obtenus pendant l'extrusion d'un matériau métallique prédéfini.

10. Panneau selon la revendication 8, **caractérisé en ce que** lesdits éléments profilés (1, 100) présentent, dans une coupe transversale, une configuration sensiblement en forme de C, de sorte à former une première aile (2) et une deuxième aile opposée (3) qui sont mutuellement parallèles et qui sont connectées au niveau d'une extrémité à une troisième aile (4) qui est agencée approximativement à angle droit par rapport à elles.

11. Panneau selon la revendication 10, **caractérisé en ce que** lesdits premiers logements (7a, 7b) sont dirigés dans la direction opposée par rapport aux première et deuxième surfaces internes se faisant face (5, 6) desdites première et deuxième ailes (2, 3).

12. Panneau selon l'une des revendications 8 à 11, **caractérisé en ce que** lesdits moyens de fixation (11) sont constitués par une ou plusieurs couches de matériau bi-adhésif.

13. Panneau selon l'une des revendications 8 à 12, **caractérisé en ce que** lesdits premiers logements (7a, 7b) sont mutuellement adjacents et se trouvent sur un plan d'agencement qui est situé au dessus desdits deuxièmes logements (10a, 10b) de sorte à former, ensembles, dans une coupe transversale, une configuration approximativement en forme de S.

14. Panneau selon l'une des revendications 10 à 13, **caractérisé en ce que** lesdits premiers logements (7a, 7b) affectent en partie l'épaisseur de ladite troisième aile (4) jusqu'à la proximité de sa surface externe, de sorte à former des premières surfaces en forme de gradin (13a, 13b) qui se trouvent approximativement parallèles à ladite surface externe, affectant une partie de l'épaisseur desdites première (2) et deuxième (3) ailes pour une extension verticale qui est approximativement égale à la hauteur desdites première (8) et deuxième (9) plaques métalliques.

15. Panneau selon la revendication 14, **caractérisé en ce que** lesdites premières surfaces en forme de gradin (13a, 13b) sont connectées au niveau de leurs extrémités inférieures à des premières régions plates (14a, 14b) respectives qui sont agencées à angle droit par rapport auxdites premières surfaces en forme de gradin (13a, 13b) de sorte à permettre le contact d'au moins une partie desdites première et deuxième plaques métalliques (8, 9) respectives.

16. Panneau selon la revendication 15, **caractérisée en ce que** lesdites premières régions plates (14a, 14b) sont connectées, sur le côté opposé par rapport auxdites premières surfaces en forme de gradin (13a, 13b) à des deuxièmes surfaces en forme de gradin (15a, 15b) respectives qui sont parallèles aux précédentes et qui affectent une partie de l'épaisseur desdites première et deuxième ailes (2, 3) pour une extension verticale qui correspond approximativement à la hauteur desdites une ou plusieurs couches de matériau bi-adhésif (11).

17. Panneau selon la revendication 16, **caractérisé en ce que** lesdites deuxièmes surfaces en forme de gradin (15a, 15b) sont connectées, sur le côté opposé par rapport auxdites premières régions plates (14a, 14b), à des deuxièmes régions plates (16a, 16b) respectives pour le support desdites une ou plusieurs couches de matériau bi-adhésif (11).

18. Panneau selon la revendication 17, **caractérisée en ce que** lesdites deuxièmes régions plates (16a, 16b), à partir desdites deuxièmes surfaces en forme de gradin (15a, 15b), s'étendent à angle droit par rapport à celles-ci jusqu'à atteindre les extrémités desdites première et deuxième ailes (2, 3) qui sont dirigées à l'opposé par rapport à ladite troisième aile (4).

19. Panneau selon l'une des revendications 8 à 18, **caractérisé en ce que** ladite corniche annulaire (17) qui est perimétriquement fermée, présente en vue de plan approximativement la forme d'un cadre polygonal qui est carré ou rectangulaire, de sorte à former, au niveau desdits premiers logements (7a, 7b) qui sont ainsi connectés entre eux, des évidements respectifs qui sont approximativement formés de façon complémentaire au périmètre desdites première et deuxième plaques métalliques et sont donc adaptés pour contenir lesdites plaques métalliques (8, 9) dans une configuration à fleur.

20. Panneau selon la revendication 8, **caractérisé en ce qu'**il est plat et rainuré (20) au niveau de son épaisseur périmétrique.

21. Panneau selon la revendication 8, **caractérisé en ce que** ledit panneau sandwich creux métallique (19) est plat et est sensiblement lisse au niveau de son épaisseur périmétrique.

22. Panneau selon l'une des revendications 8 ou 10 à 21, **caractérisé en ce que** lesdits éléments profilés (100) présentent un profil courbe ou en forme d'arc, de sorte à permettre, au moyen de la connexion à ceux-ci d'une première plaque métallique (108) et d'une deuxième plaque métallique (109) présentant un un profil courbe ou en forme d'arc correspondant, l'obtention d'un panneau sandwich creux métallique (119) choisi qui présente un profil courbe ou en forme d'arc.
